# EUROPEAN PATENT APPLICATION

(11) **EP 1 670 220 A1**
(43) Date of publication of application: **14.06.2006**
(21) Application number: 05026640.2
(22) Date of filing: 06.12.2005
(51) Int. Cl.: H04M 1/22, G06F 1/32

(54) **Portable electronic device, corresponding method for battery status indication by means of a lighting unit and related program product**

(30) Priority: 10.12.2004 JP 2004358504
(71) Applicant: NEC Corporation, Minato-ku Tokyo (JP)
(72) Inventor: Hirokawa, Yohei c/o NEC Corporation, Tokyo (JP)
(74) Representative: Glawe, Delfs, Moll

(57) **Abstract**

A potable electronic device, includes: a display unit; a light emitting unit which is lit to notify an ON state of a power source in a power saving state in which a light of the display unit is turned OFF in the ON state of the power source using a battery; a voltage measuring unit which measures a voltage of the battery; and a lighting control unit which controls a lighting state of the light emitting unit in accordance with the voltage of the battery measured by the voltage measuring unit.

## Description

### BACKGROUND OF THE INVENTION

### 1. Field of the Invention

The present invention relates to a portable electronic device, a lighting control method used for the same, and a program product. More particularly, the invention relates to a portable electronic device capable of checking a battery remaining amount of a power source unit, a lighting control method used for the same, and a program product.

### 2. Description of the Related Art

A portable electronic device such as a portable telephone, a personal handy-phone system (PHS) and a personal digital assistance (PDA) uses a battery for a power source unit to supply power. A remaining amount of this battery is normally displayed on a display unit of the portable electronic device. The portal electronic device takes various power saving measures to use the battery for a long time. An example of the portable electronic device that takes the power saving measures is a portable electronic device (portable wireless communication device) disclosed in JP 2003-101643 A. According to this portable electronic device, when there is no operation by a user for a certain period of time in an ON state of a power source, a light of a display unit is turned OFF to move to a power saving state. Hence, nothing is displayed on the display unit in the power saving state. Then, a light emitting diode (LED) of a key operation unit is periodically lit to notify the ON state of the power source to the user. As a result, this portable electronic device can use the battery for a long time by turning OFF the light of the display unit to reduce waste of the battery.

However, the conventional portable electronic device has the following problem. That is, in the portable electronic device, as the light of the display unit is tuned OFF in the power saving state, nothing is displayed on the display unit in this state. Consequently, in the power saving state, a battery remaining amount is not displayed, making it impossible to check the battery remaining amount. Thus, there is a problem that it will not be noticed by the user when the battery remaining amount is almost zero.

### SUMMARY OF THE INVENTION

An exemplary feature of the present invention developed in view of the foregoing situation is to provide a portable electronic device capable of notifying information indicating a battery remaining amount to a user even when a light of a display unit is turned OFF in a power saving state.

In the view of foregoing and other exemplary problems, drawbacks, and disadvantages, an exemplary potable electronic device of the present invention includes: a display unit; a light emitting unit which is lit to notify an ON state of a power source in a power saving state in which a light of the display unit is turned OFF in the ON state of the power source using a battery; a voltage measuring unit which measures a voltage of the battery; and a lighting control unit which controls a lighting state of the light emitting unit in accordance with the voltage of the battery measured by the voltage measuring unit.

An exemplary lighting control method of the present invention used for a portable electronic device including a display unit and a light emitting unit which is lit to notify an ON state of a power source in a power saving state in which a light of the display unit is turned OFF in the ON state of the power source using a battery, the lighting control method includes: measuring a voltage of the battery; and controlling a lighting state of the light emitting unit in accordance with the measured voltage of the battery.

An exemplary advantage of the invention is that the information indicating the battery remaining amount can be notified to the user even when the light of the display unit is turned OFF in the power saving state.

### BRIEF DESCRIPTION OF THE DRAWINGS

Exemplary features and advantages of the present invention will become apparent from the following detailed description when taken with the accompanying drawings in which:
FIG. 1 is a diagram showing a first exemplary embodiment according to a portable electronic device of the present invention;
FIG. 2 is a flowchart showing an example of an operation of the first exemplary embodiment of the portable electronic device of the invention;
FIG. 3 is a diagram showing an example of a relation between a battery voltage and a lighting control parameter (lighting time) ;
FIG. 4 is a diagram showing a second exemplary embodiment according to a portable electronic device of the present invention;
FIG. 5 is a flowchart showing an example of an operation of the second exemplary embodiment of the portable electronic device of the invention;
FIG. 6 is a diagram showing an example of a relation between a battery voltage and a light control parameter (number of flashing times);
FIG. 7 is a diagram showing a third exemplary embodiment according to a portable electronic device of the present invention;
FIG. 8 is a flowchart showing an example of an operation of the third exemplary embodiment of the portable electronic device of the invention;
FIG. 9 is a diagram showing an example of a relation between a battery voltage and a light control parameter (lighting color);
FIG. 10 is a diagram showing a fourth exemplary embodiment according to a portable electronic device of the present invention;
FIG. 11 is a flowchart showing an example of an operation of the fourth exemplary embodiment of the portable electronic device of the invention; and
FIG. 12 is a diagram showing an example of a relation between a battery voltage and a lighting control parameter (lighting interval).

### DETAILED DESCRIPTION OF THE PREFERRED EMBODIMENTS

Next, an exemplary embodiment of the present invention will be described with reference to the drawings.

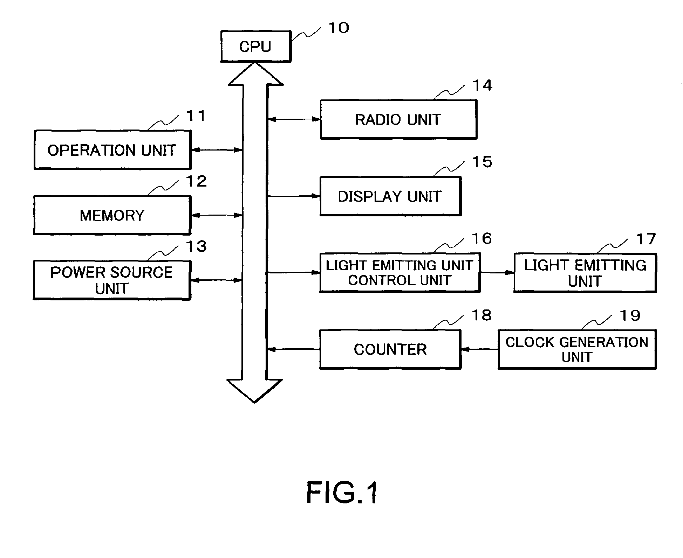

FIG. 1 is a diagram showing a first exemplary embodiment according to a portable electronic device of the present invention.

Hereinafter, the following description will be made by using a portable telephone set as an example of a portable electronic device.

This portable telephone set includes a central processing unit (CPU) 10, an operation unit 11, a memory 12, a power source unit 13, a radio unit 14, and a display unit 15. It further includes a light emitting unit control unit 16, a light emitting unit 17, a counter 18, and a clock generation unit 19.

The CPU 10 controls the entire portable telephone set based on a control program. The CPU 10 measures a voltage of a battery which the power source unit 13 has based on a lighting control program (voltage measuring unit). The CPU 10 controls a lighting state of the light emitting unit 17 via the light emitting unit control unit 16 based on the measured voltage of the battery.

For example, the operation unit 11 has a transmission key, a conversion key of an alphabetic character/kana/Chinese character/numeral, an ON/OFF key of a power source, a cross key for operating a cursor, an end key, and the like. For example, by operating these keys, a user can create a message for transmission, or the like. The user operates the ON/OFF key of the power source to set the portable telephone set to a power ON or OFF state. Thus, the operation unit 11 is a part of a user interface for operating the portable telephone set.

The memory 12 is constituted of a read only memory (ROM) and a random access memory (RAM). The ROM stores programs such as a control program for controlling the entire portable telephone set, and a lighting control program for controlling a lighting state of the light emitting unit 17 via the light emitting unit control unit 16. The RAM is used as a work area of the CPU 10. The RAM stores temporary user setting and lighting control parameters. These lighting control parameters are used when the CPU 10 uses the lighting control program to control the lighting state of the light emitting unit 17.

For example, the power source unit 13 is constituted of a lithium ion battery or the like to supply power to the entire portable telephone set.

The radio unit 14 transfers a radio electric wave with a radio base station (not shown). This radio base station is connected to a normal telephone line via a mobile communication switching station (not shown).

The display unit 15 is constituted of, e.g., a liquid crystal display (LCD) or the like, and receives an illumination light (backlight or the like) to display a screen. The display unit 15 may be electroluminescence (EL) or the like to display a screen by a self-emitting light.

The light emitting unit control unit 16 is constituted of a transistor or the like to be ON/OFF controlled based on a control signal from the CPU 10, and controls lighting/extinguishing of the light emitting unit 17 based on the control of the CPU 10. The CPU 10 and the light emitting unit control unit 16 constitute a lighting control unit.

The light emitting unit 17 is a light emitting element such as a light emitting diode (LED) to be lit/extinguished by control of the light emitting unit control unit 16. The light emitting unit 17 is incorporated in optional one or more of a plurality of keys which the operation unit 11 has. The light emitting unit 17 may be disposed near optional one or more of the plurality of keys of the operation unit 11.

The clock generation unit 19 generates a clock which becomes a reference for an operation of the portable telephone set.

The counter 18 counts clocks to generate a count value.

The CPU 10 detects the count value from the counter 18 to measure a time based on the control program when the power source is in an ON state. The CPU 10 refers to the measured time, and extinguishes the illumination light or the self-emitting light to transfer to a power saving state when the operation unit 11 has not been operated for a certain period of time. Then, the CPU 10 controls the light emitting unit control unit 16 to light the light emitting unit 17, thereby notifying the ON state of the power source to the user.

The CPU 10 monitors a voltage of a battery of the power source unit 13 based on the lighting control program, and controls the lighting state of the light emitting unit 17 via the light emitting unit control unit 16 in accordance with this voltage. Specifically, according to the first exemplary embodiment, the CPU 10 executes the lighting control program, and controls a lighting time of the light emitting unit 17 based on the lighting control parameter (lighting time) stored in the memory 12 corresponding to the battery voltage.

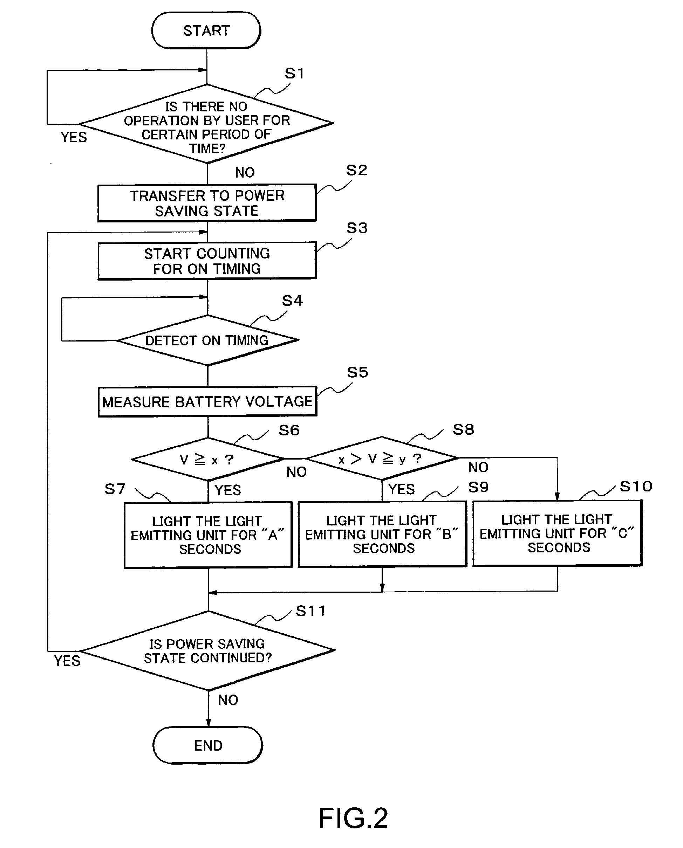

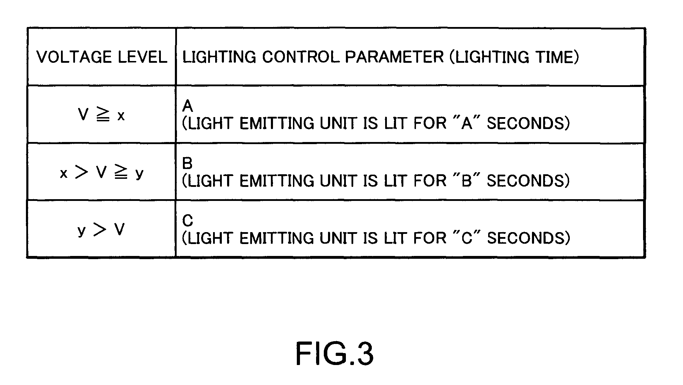

Next, an operation of the portable electronic device (portable telephone set) of the exemplary embodiment will be described in detail with reference to FIGS. 2 and 3.

First, the power ON key of the operation unit 11 of the portable telephone set is operated to set the power source to an ON state, whereby a remaining amount of the battery of the power source unit is displayed on the display unit.

In FIG. 1, in step S1 of FIG. 2, in the ON state of the power source, the CPU 10 detects a count value from the counter 18 to measure a time. Subsequently, the CPU 10 proceeds to step S2 when the operation unit 11 is not operated even after a passage of certain time.

In step S2 of FIG. 2, the CPU 10 extinguishes an illumination light or a self-emitting light of the display unit 15 to transfer to a power saving state. As the light of the display unit 15 has been turned OFF, nothing is displayed on the display unit 15. Accordingly, in the power saving state, a remaining amount of the battery is not displayed, and the user cannot check the battery remaining amount.

In step S3 of FIG. 2, in order to detect timing for lighting the light emitting unit 17 (ON timing), the CPU 10 causes the counter 18 to start counting.

In step S4 of FIG. 2, the CPU 10 proceeds to step S5 when a count value from the counter 18 becomes "a value corresponding to ON timing". For example, a time from when the CPU 10 causes the counter 18 to start counting to when the count value becomes "a value corresponding to ON timing" is a predetermined time from 5 to 10 seconds as a default, and is set by the memory 12. This time can be optionally set by changing "the value corresponding to the ON timing". The "value corresponding to the ON timing" corresponds to a period (time) until the ON timing is detected. The "value corresponding to the ON timing" corresponds to a lighting interval from lighting of the light emitting unit 17 to next lighting of the same.

In step S5 of FIG. 2, the CPU 10 measures a battery voltage V.

In step S6 of FIG. 2, the CPU 10 checks whether the battery voltage V is equal to or more than x (V ≥ x). The CPU 10 proceeds to step S7 when the battery voltage V is equal to or more than x, and to step S8 when the battery voltage V is less than x.

Now, a lighting control parameter selection table used in steps S7, S9 and S10 will be described. FIG. 3 shows an example of a relation between a battery voltage and a lighting control parameter (lighting time), showing the lighting control parameter selection table. This table correlates lighting times of the light emitting unit 17 to three voltage levels classified based on the battery voltages. That is, a lighting time of the light emitting unit 17 is "A" seconds when a battery voltage V is V ≥ x, a lighting time of the light emitting unit 17 is "B" seconds when a battery voltage V is x > V ≥ y, and a lighting time of the light emitting unit 17 is "C" seconds when a battery voltage V is y > V. Here, "x" and "y" are voltage reference values, and a relation of x > y is established. For example, "x" is 3.7 volts, and "y" is 3.5 volts. "A", "B" and "C" are lighting times, and a relation of A > B > C is established. For example, "A" is 1 second, "B" is 0.5 seconds, and "C" is 0.25 seconds. These values are preset as defaults in the memory 12. Values of "x", "y", "A", "B" and "C" are not limited to the above, but may be set as occasion demands. These values can be changed based on execution of the control program by the CPU 10 and user's operation of the operation unit.

Next, in step S7 of FIG. 2, the CPU 10 reads the lighting control parameter "A" seconds in the case of the voltage level V ≥ x from the light control parameter selection table stored in the memory 12 shown in FIG. 3. The CPU 10 controls the light emitting unit control unit 16 to light the light emitting unit 17 for "A" seconds. Subsequently, the CPU 10 proceeds to step S11.

In step S8 of FIG. 2, the CPU 10 checks whether the battery voltage V is less than x and equal to or more than y (x > V ≥ y). The CPU 10 proceeds to step S9 when the battery voltage V is less than x and equal to or more than y, and to step S10 when the battery voltage V is less than y.

In step S9 of FIG. 2, the CPU 10 reads the lighting control parameter "B" seconds in the case of the voltage level x > V ≥ y from the light control parameter selection table stored in the memory 12 shown in FIG. 3. The CPU 10 controls the light emitting unit control unit 16 to flash the light emitting unit 17 for "B" seconds. Subsequently, the CPU 10 proceeds to step S11.

In step S10 of FIG. 2, the CPU 10 reads the lighting control parameter "C" seconds in the case of the voltage level y > V from the light control parameter selection table stored in the memory 12 shown in FIG. 3. The CPU 10 controls the light emitting unit control unit 16 to light the light emitting unit 17 for "C" seconds. Subsequently, the CPU 10 proceeds to step S11.

In step S11 of FIG. 2, the CPU 10 checks whether the operation unit 11 has been operated or not in the period of steps S2 to S10.

When the CPU 10 determines that the operation unit 11 has been operated in the period of steps S2 to S10, the CPU 10 stores information indicating the operation in the memory 12. In step S11, the CPU 10 checks whether the information indicating the operation has been stored or not in the memory 12 to detect that the operation unit 11 has been operated.

Then, upon detection of the operation of the operation unit 11 in step S11, the CPU 10 lights an illumination light or a self-emitting light of the display unit 15 to transfer from the power saving state to a normal state. As the display unit 15 has been lit, a remaining amount of the battery is displayed on the display unit 15, thereby enabling the user to check the remaining amount of the battery. Subsequently, the CPU 10 finishes the control of the lighting state of the light emitting unit 17.

Upon detection of nonoperation of the operation unit 11 in step S11, the CPU 10 proceeds to step S3 to repeat the processing of step S3 to S11.

When the CPU 10 repeats the processing of steps S3 to S11 of FIG. 2, the lighting period of "A, B or C" seconds of the light emitting unit 17 and the ON timing detection period are cyclically repeated. This ON timing detection period has a predetermined time interval of 5 to 10 seconds. The ON timing detection period is an extinguished period when the light emitting unit 17 is turned OFF. Accordingly, the light emitting unit 17 is cyclically repeated between lit and extinguished states.

As described above, the portable telephone set of the first exemplary embodiment controls the lighting time of the light emitting unit 17 corresponding to the battery voltage in the ON state of the power source and in the power saving state in which the light of the display unit 15 is turned OFF. As a result, the user can visually check the battery remaining amount.

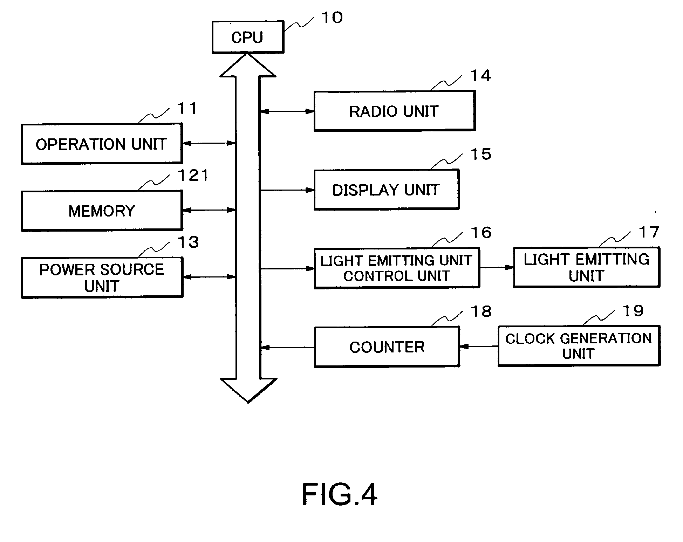

FIG. 4 is a diagram showing a second exemplary embodiment according to a portable electronic device of the present invention.

Hereinafter, the following description will be made by using a portable telephone set as an example of the portable electronic device.

Components similar to those of the first exemplary embodiment shown in FIG. 1 are denoted by similar reference numerals. As shown in FIG. 4, this portable telephone set includes a memory 121 to store a different lighting control program and a different lighting control parameter (number of flashing times) in place of the memory 12 of FIG. 1.

According to the second exemplary embodiment, the CPU 10 executes the lighting control program, and controls the number of flashing times of a light emitting unit 17 based on the lighting control parameter (number of flashing times) stored in the memory 121 corresponding to a battery voltage.

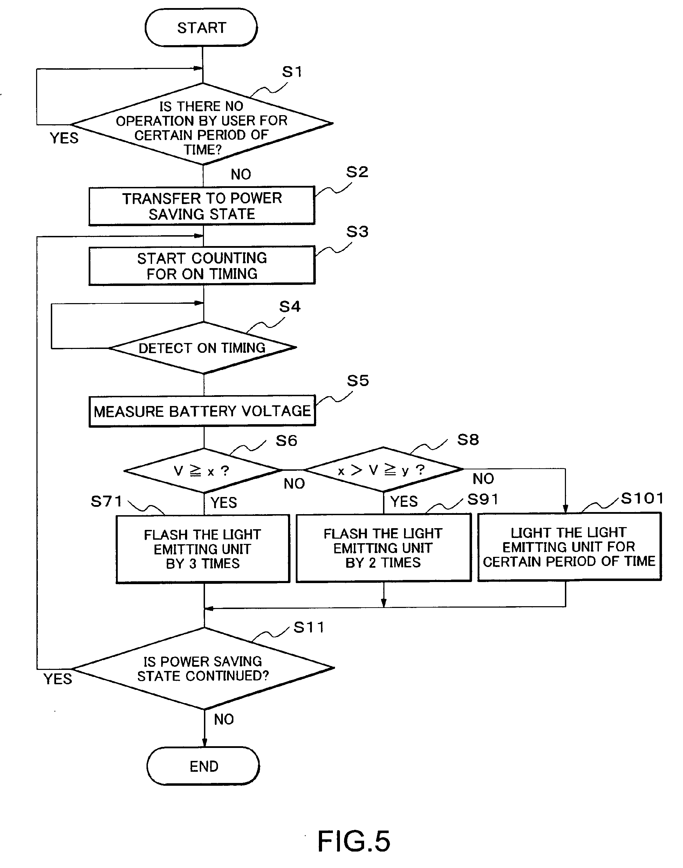

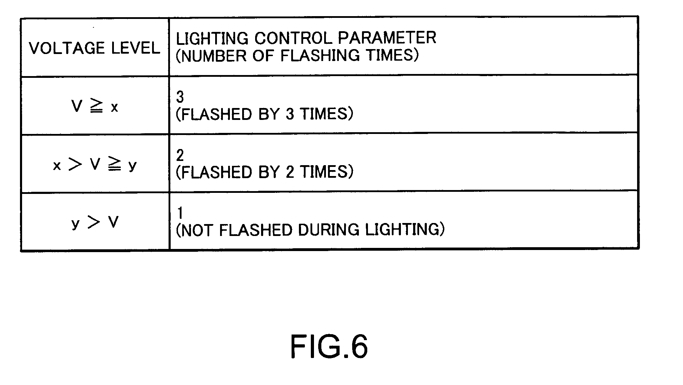

Next, an operation of the portable electronic device (portable telephone set) of the exemplary embodiment will be described in detail with reference to FIGS. 5 and 6.

First, a power ON key of an operation unit 11 of the portable telephone set is operated to set a power source to an ON state, whereby a remaining amount of the battery of a power source unit is displayed on a display unit.

In FIG. 4, processing from step S1 to step S5 of FIG. 5 is similar to that from step S1 to step S5 of the first exemplary embodiment shown in FIG. 2.

Next, in step S6 of FIG. 5, the CPU 10 checks whether the battery voltage V is not less than x (V ≥ x). The CPU 10 proceeds to step S71 when the battery voltage V is not less than x, and to step S8 of FIG. 5 when the battery voltage V is less than x.

Now, a lighting control parameter selection table used in steps S71, S91 and S101 of FIG. 5 will be described. FIG. 6 shows an example of a relation between a battery voltage and a lighting control parameter (number of flashing times), showing the lighting control parameter selection table. This table correlates the numbers of flashing times of the light emitting unit 17 to three voltage levels classified based on the battery voltages. That is, the number of flashing times of the light emitting unit 17 is 3 when a battery voltage V is V ≥ x, the number of flashing times of the light emitting unit 17 is 2 when a battery voltage V is x > V ≥ y, and the number of flashing times of the light emitting unit 17 is 1 when a battery voltage V is y > V. In this case, in effect, the light emitting unit 17 is not flashed during its lighting. Here, "x" and "y" are voltage reference values, and are similar to those described above with reference to the memory 12 of the first exemplary embodiment. The values of the numbers of flashing times are not limited to 1 to 3, but may be changed as occasion demands. The values of the numbers of flashing times can be changed based on execution of the control program by the CPU 10 and user's operation of the operation unit.

Next, in step S71 of FIG. 5, the CPU 10 reads the lighting control parameter "3" in the case of the voltage level V ≥ x from the light control parameter selection table stored in the memory 121 shown in FIG. 6. The CPU 10 controls the light emitting unit control unit 16 to flash the light emitting unit 17 by 3 times. According to this flashing cycle, a lighting period is 0.4 seconds, and an extinguishing period is 0.4 seconds. The values of the lighting and extinguishing periods are not limited to 0.4 4 seconds, but may be changed as occasion demands. Subsequently, the CPU 10 proceeds to step S11 of FIG. 5.

In step S8 of FIG. 5, the CPU 10 checks whether the battery voltage V is less than x and equal to or more than y (x > V ≥ y). The CPU 10 proceeds to step S91 of FIG. 5 when the battery voltage V is less than x and equal to or more than y, and to step S101 of FIG. 5 when the battery voltage V is less than y.

In step S91 of FIG. 5, the CPU 10 reads the lighting control parameter "2" in the case of the voltage level x > V > y from the light control parameter selection table stored in the memory 121 shown in FIG. 6. The CPU 10 controls the light emitting unit control unit 16 to flash the light emitting unit 17 by 2 times. This flashing cycle is the same as that in step S71 of FIG. 5. Subsequently, the CPU 10 proceeds to step S11.

In step S101 of FIG. 5, the CPU 10 reads the lighting control parameter "1" in the case of the voltage level y > V from the light control parameter selection table stored in the memory 121 shown in FIG. 6. The CPU 10 controls the light emitting unit control unit 16 to flash the light emitting unit 17 by 1 time. That is, the light emitting unit 17 emits light for a predetermined time (e.g., 1 second). Subsequently, the CPU 10 proceeds to step S11.

In FIG. 5, processing of step S11 of FIG. 5 is similar to that of step S11 of the first exemplary embodiment shown in FIG. 2.

When the CPU 10 repeats the processing of steps S3 to S11 of FIG. 5, the flashing periods of "1 to 3 times" of the light emitting unit 17 and the ON timing detection period are cyclically repeated.

The ON timing detection period is an extinguished period when the light emitting unit 17 is turned OFF.

As described above, the portable telephone set of the second exemplary embodiment controls the number of f lashing times of the light emitting unit 17 corresponding to the battery voltage in the ON state of the power source and in the power saving state in which the light of the display unit 15 is turned OFF. As a result, the user can visually check the battery remaining amount.

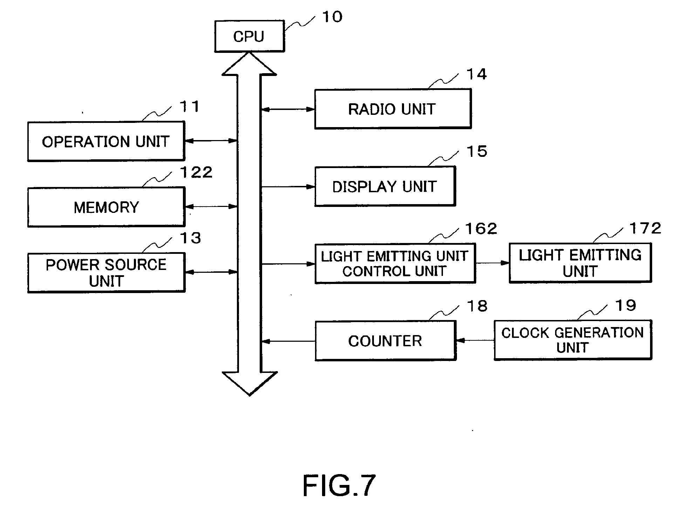

FIG. 7 is a diagram showing a third exemplary embodiment according to a portable electronic device of the present invention.

Hereinafter, the following description will be made by using a portable telephone set as an example of the portable electronic device.

Components similar to those of the first exemplary embodiment shown in FIG. 1 are denoted by similar reference numerals. As shown in FIG. 7, this portable telephone set includes a memory 122 to store a different lighting control program and a different lighting control parameter (lighting color) in place of the memory 12 of FIG. 1. This portable telephone set further includes a light emitting unit control unit 162 and a light emitting unit 172 different in configuration in place of the light emitting unit control unit 16 and the light emitting unit 17. Other components are similar to those of FIG. 1. A CPU 10 and the light emitting unit control unit 162 constitute a lighting control unit.

The light emitting unit 172 is configured by incorporating an LED of three colors, red, green and blue, in one chip. The light emitting unit control unit 162 is constituted of a transistor or the like ON/OFF controlled based on a control signal from the CPU 10. A lighting state of the light emitting unit 172 is controlled for each color under control of the CPU 10.

According to the third exemplary embodiment, the CPU 10 executes the lighting control program, and controls a color of a light emitted from light emitting unit 172 based on the lighting control parameter (lighting color) stored in the memory 122 corresponding to a battery voltage.

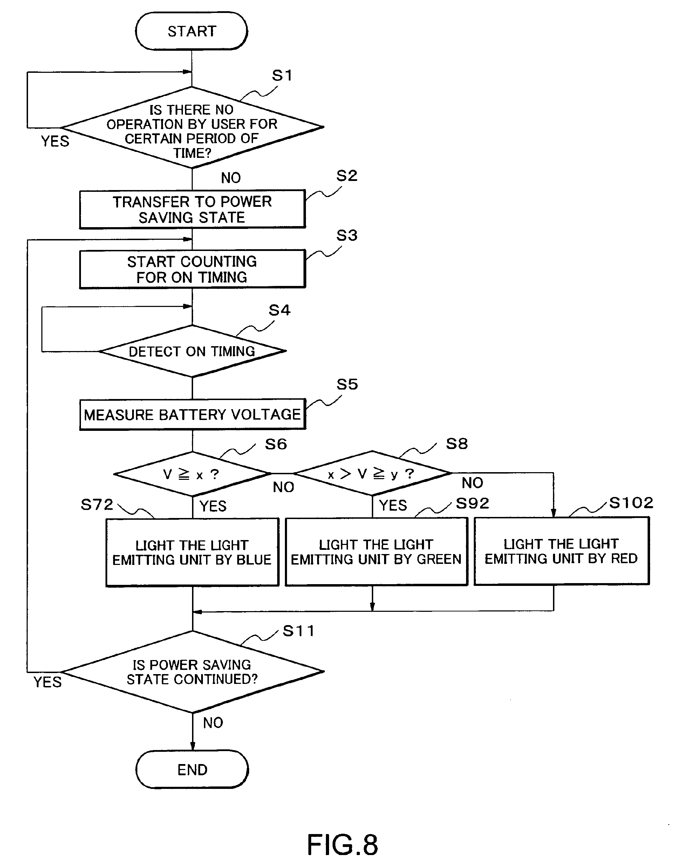

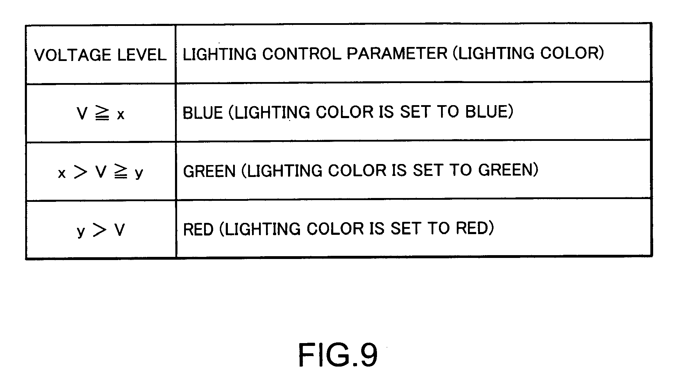

Next, an operation of the portable electronic device (portable telephone set) of the exemplary embodiment will be described in detail with reference to FIGS. 8 and 9.

First, a power ON key of an operation unit 11 of the portable telephone set is operated to set a power source to an ON state, whereby a remaining amount of the battery of a power source unit is displayed on a display unit.

In FIG. 7, processing from step S1 to step S5 of FIG. 8 is similar to that from step S1 to step S5 of the first exemplary embodiment shown in FIG. 2. However, the light emitting unit control unit 16 and the light emitting unit 17 of the first exemplary embodiment are regarded as a light emitting unit control unit 162 and a light emitting unit 172.

Next, in step S6 of FIG. 8, the CPU 10 checks whether the battery voltage V is not less than x (V ≥ x). The CPU 10 proceeds to step S72 when the battery voltage V is not less than x, and to step S8 of FIG. 8 when the battery voltage V is less than x.

Now, a lighting control parameter selection table used in steps S72, S92 and S102 of FIG. 8 will be described. FIG. 9 shows an example of a relation between a battery voltage and a lighting control parameter (lighting color), showing the lighting control parameter selection table. This table correlates lighting colors of the light emitting unit 172 to three voltage levels classified based on the battery voltages. That is, the lighting color of the light emitting unit 172 is blue when a battery voltage V is V ≥ x, the lighting color of the light emitting unit 172 is green when a battery voltage V is x > V ≥ y, and the lighting color of the light emitting unit 172 is red when a battery voltage V is y > V. Here, "x" and "y" are voltage reference values, and are similar to those described above with reference to the memory 12 of the first exemplary embodiment. The lighting colors are not limited to blue, green and red, but may be changed as occasion demands.

Next, in step S72 of FIG. 8, the CPU 10 reads the lighting control parameter "blue" in the case of the voltage level V ≥ x from the light control parameter selection table stored in the memory 122 shown in FIG. 9. The CPU 10 controls the light emitting unit control unit 162 to light a blue LED of the light emitting unit 172 forlsecond, for example. This lighting period is not limited to 1 second, but may be changed as occasion demands. Subsequently, the CPU 10 proceeds to step S11 of FIG. 8.

In step S8 of FIG. 8, the CPU 10 checks whether the battery voltage V is less than x and equal to or more than y (x > V ≥ y). The CPU 10 proceeds to step S92 of FIG. 8 when the battery voltage V is less than x and equal to or more than y, and to step S102 of FIG. 8 when the battery voltage V is less than y.

In step S92 of FIG. 8, the CPU 10 reads the lighting control parameter "green" in the case of the voltage level x > V ≥ y from the light control parameter selection table stored in the memory 122 shown in FIG. 9. The CPU 10 controls the light emitting unit control unit 162 to light a green LED of the light emitting unit 172 for 1 second, for example. This lighting period is not limited to 1 second, but may be changed as occasion demands. Subsequently, the CPU 10 proceeds to step S11.

In step S102 of FIG. 8, the CPU 10 reads the lighting control parameter "red" in the case of the voltage level y > V from the light control parameter selection table stored in the memory 122 shown in FIG. 9. The CPU 10 controls the light emitting unit control unit 162 to light a red LED of the light emitting unit 172 for 1 second, for example. This lighting period is not limited to 1 second, but may be changed as occasion demands. Subsequently, the CPU 10 proceeds to step S11.

Processing of step S11 of FIG. 8 is similar to that of step S11 of the first exemplary embodiment shown in FIG. 2.

When the CPU 10 repeats the processing of steps S3 to S11 of FIG. 8, the lighting period of the light emitting unit 172 lit by a blue, green or red color for 1 second and the predetermined ON timing detection period are cyclically repeated. The ON timing detection period is an extinguishing period when the light emitting unit 17 is turned OFF. Accordingly, the light emitting unit 17 is cyclically repeatedbetween lighting and extinguishing by a blue, green or red color.

As described above, the portable telephone set of the third exemplary embodiment controls the lighting colors of the light emitting unit 172 corresponding to the battery voltage in the ON state of the power source and in the power saving state in which the light of the display unit 15 is turned OFF. As a result, the user can visually check the battery remaining amount.

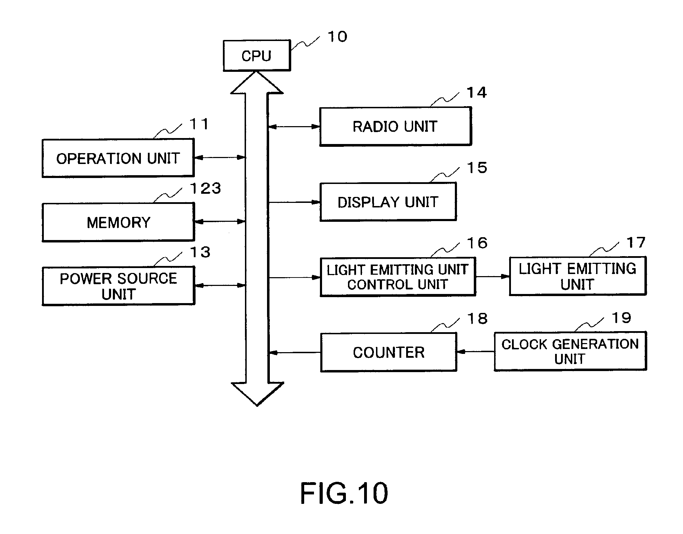

FIG. 10 is a diagram showing a fourth exemplary embodiment according to a portable electronic device of the present invention.

Hereinafter, the following description will be made by using a portable telephone set as an example of the portable electronic device.

Components similar to those of the first exemplary embodiment shown in FIG. 1 are denoted by similar reference numerals. As shown in FIG. 10, this portable telephone set includes a memory 123 to store a different lighting control program and a different lighting control parameter (lighting interval) in place of the memory 12 of FIG. 1. Other components are similar to those of FIG. 1.

According to the fourth exemplary embodiment, the CPU 10 executes the lighting control program, and controls the lighting time interval of the light emitting unit 17 based on the lighting control parameter (lighting interval) stored in the memory 123. In other words, a time interval between a lighting period of the light emitting unit 17 and a next lighting period of the same is controlled corresponding to a battery voltage.

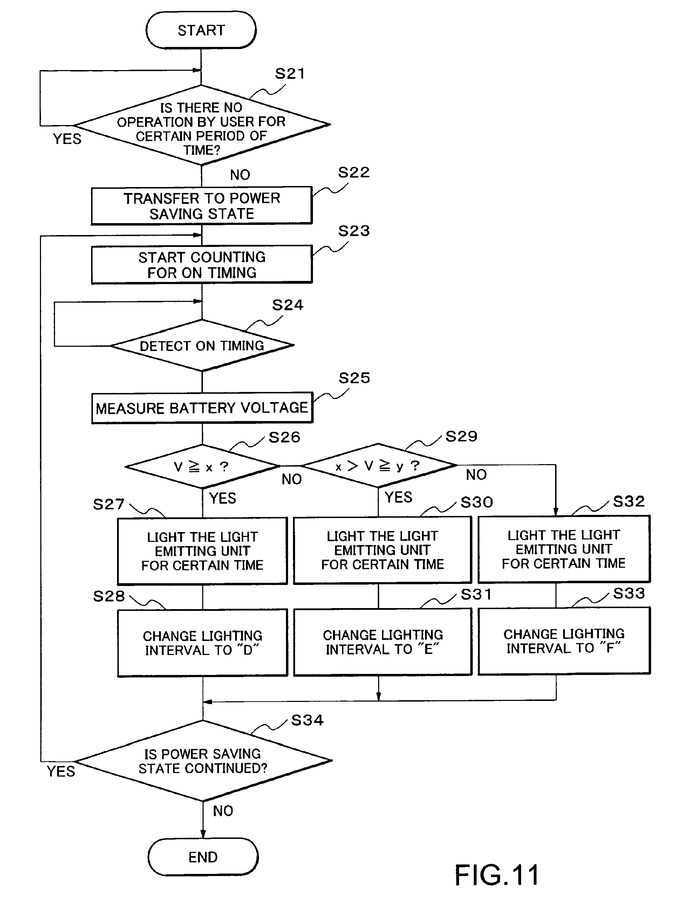

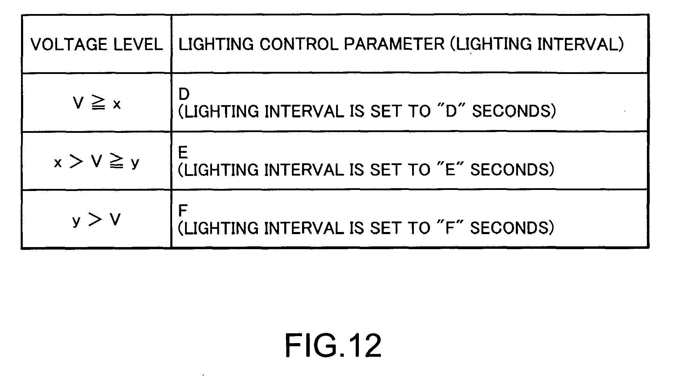

Next, an operation of the portable electronic device (portable telephone set) of the exemplary embodiment will be described in detail with reference to FIGS. 11 and 12.

First, a power ON key of the operation unit 11 of the portable telephone set is operated to set a power source to an ON state, whereby a remaining amount of the battery of a power source unit is displayed on a display unit.

In FIG. 10, processing from step S21 to step S25 of FIG. 11 is similar to that from step S1 to step S5 of the first exemplary embodiment shown in FIG. 2. However, the memory 12 of the first exemplary embodiment is regarded as a memory 123.

Next, in step S26 of FIG. 11, the CPU 10 checks whether the battery voltage V is not less than x (V ≥ x). The CPU 10 proceeds to step S27 of FIG. 11 when the battery voltage V is not less than x, and to step S29 of FIG. 11 when the battery voltage V is less than x.

Now, a lighting control parameter selection table used in steps S28, S31 and S33 of FIG. 11 will be described. FIG. 12 shows an example of a relation between a battery voltage and a lighting control parameter (lighting interval), showing the lighting control parameter selection table. This table correlates lighting intervals of the light emitting unit 17 to three voltage levels classified based on the battery voltages. That is, a lighting interval of the light emitting unit 17 is "D" seconds when a battery voltage V is V ≥ x, a lighting interval of the light emitting unit 17 is "E" seconds when a battery voltage V is x > V ≥ y, and a lighting interval of the light emitting unit 17 is "F" seconds when a battery voltage V is y > V. Here, "x" and "y" are voltage reference values, and are similar to those described above with reference to the memory 12 of the first exemplary embodiment. A relation of D > E > F is established among "D", "E", and "F". For example, "F" is a value from 5 to 10 seconds, and preset. For example, "E" is a value twice as large as "F", and "D" is a value three times as large as "F". These values are preset as defaults in the memory 123. The values of "D", "E", and "F" are not limited to the above, but may be set as occasion demands. The values can be changed based on execution of the control program by the CPU 10 and user' s operation of the operation unit.

Next, in step S27 of FIG. 11, the CPU 10 controls the light emitting unit control unit 16 to light the light emitting unit 17 for a certain period of time (e.g., 1 second). This lighting period is not limited to 1 second, but may be changed as occasion demands. Subsequently, the CPU 10 proceeds to step S28.

Instep S28 of FIG. 11, the CPU 10 reads the lighting control parameter of "D" seconds in the case of the voltage level V ≥ x from the lighting control parameter selection table stored in the memory 123 shown in FIG. 12. Then, the CPU 10 sets "the value corresponding to the ON timing" used in step S24 corresponding to "D" seconds in the memory 123. Subsequently, the CPU 10 proceeds to step S34.

In step S29 of FIG. 11, the CPU 10 checks whether the battery voltage V is less than x and equal to or more than y (x > V > y). The CPU 10 proceeds to step S30 of FIG. 11 when the battery voltage V is less than x and equal to or more than y, and to step S32 of FIG. 11 when the battery voltage V is less than y.

Next, in step S30 of FIG. 11, the CPU 10 controls the light emitting unit control unit 16 to light the light emitting unit 17 for a certain period of time (e.g., 1 second). This lighting period is not limited to 1 second, but may be changed as occasion demands. Subsequently, the CPU 10 proceeds to step S31.

In step S31 of FIG. 11, the CPU 10 reads the lighting control parameter of "E" seconds in the case of the voltage level x > V ≥ y from the lighting control parameter selection table stored in the memory 123 shown in FIG. 12. Then, the CPU 10 sets "the value corresponding to the ON timing" used in step S24 corresponding to "E" seconds in the memory 123. Subsequently, the CPU 10 proceeds to step S34.

Next, in step S32 of FIG. 11, the CPU 10 controls the light emitting unit control unit 16 to light the light emitting unit 17 for a certain period of time (e.g., 1 second). This lighting period is not limited to 1 second, but may be changed as occasion demands. Subsequently, the CPU 10 proceeds to step S33.

In step S33 of FIG. 11, the CPU 10 reads the lighting-control parameter of "F" seconds in the case of the voltage level y > V from the lighting control parameter selection table stored in the memory 123 shown in FIG. 12. Then, the CPU 10 sets "the value corresponding to the ON timing" used in step S24 corresponding to "F" seconds in the memory 123. Subsequently, the CPU 10 proceeds to step S34.

Processing of step S34 of FIG. 11 is similar to that of step S11 of the first exemplary embodiment shown in FIG. 2.

When the CPU 10 repeats the processing from step S23 to step S34 of FIG. 11, the lighting period of 1 second of the light emitting unit 17 and the ON timing detection period (lighting interval) of "E, D or F" seconds are cyclically repeated. The ON timing detection period is an extinguishing period when the light of the light emitting unit 17 is turned OFF.

As described above, the portable telephone set of the fourth exemplary embodiment controls the lighting interval of the light emitting unit 17 corresponding to the battery voltage in the ON state of the power source and in the power saving state in which the light of the display unit 15 is turned OFF. As a result, the user can visually check the battery remaining amount.

As described above, according to this invention, the portable telephone set includes the lighting control unit for controlling the lighting state of the light emitting unit corresponding to the battery voltage in the ON state of the power source and in the power saving state in which the light of the display unit is turned OFF. As a result, even in the power saving state, the user can visually check the battery remaining amount by viewing the lighting state of the light emitting unit.

The first to fourth exemplary embodiments of the present invention have been described in detail with reference to the drawings. However, specific configurations are not limited to the embodiments, and design changes without departing from a gist of the invention area are also within the invention.

For example, according to each embodiment, the battery voltages are classified into the three voltage levels of equal to or more than x, less than x and equal to or more than y, and less than y. However, the classification of the voltage levels is not limited to 3, and an optional number of classification may be set.

According to the third exemplary embodiment, the LED of each of blue, green and red colors is individually lit. However, by selecting and simultaneously lighting LED's of a plurality of colors and by additive color mixing, the LED may be lit to be magenta, white, yellow, or cyan. The power source unit 13 is not limited to the lithium battery, but it may be constituted of a primary battery, a fuel cell or the like.

The fourth exemplary embodiment may be combined with the second exemplary embodiment. In other words, the lighting interval may be controlled corresponding to the battery voltage while flashing the light emitting unit 17 corresponding to the battery voltage during the lighting period. The third exemplary embodiment may be combined with the fourth exemplary embodiment to light the light emitting unit 172 by color and to control the lighting interval corresponding to the battery voltage.

Furthermore, the present invention may be applied to all types of portable electronic devices having batteries in power source units, such as a notebook computer, in addition to the portable telephone set and the PDA.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the spirit and scope of the following claims.

Additionally, it is the inventor's intent to retain all equivalents of the claimed invention even if the claims are amended during prosecution.

## Claims

1. A potable electronic device, comprising:
a display unit;
a light emitting unit which is lit to notify an ON state of a power source in a power saving state in which a light of the display unit is turned OFF in the ON state of the power source using a battery;
a voltage measuring unit which measures a voltage of the battery; and
a lighting control unit which controls a lighting state of the light emitting unit in accordance with the voltage of the battery measured by the voltage measuring unit.

2. A portable electronic device according to claim 1, further comprising an operation unit to operate the portable electronic device, wherein:
the display unit displays a screen by one of an illumination light and a self-emitting light; and
transfer to the power saving state is made by extinguishing one of the illumination light and the self-emitting light used for displaying the screen if the operation unit is not operated for a certain period of time.

3. A portable electronic device according to claim 1, wherein the lighting control unit controls a lighting time of the light emitting unit corresponding to the voltage of the battery.

4. A portable electronic device according to claim 1, wherein the lighting control unit periodically lights the light emitting unit based on a lighting period and an extinguishing period of a predetermined time interval, and controls a time of the lighting period corresponding to the voltage of the battery.

5. A portable electronic device according to claim 1, wherein the lighting control unit flashes the light emitting unit, and controls the number of flashing times corresponding to the voltage of the battery.

6. A portable electronic device according to claim 1, wherein the lighting control unit periodically lights the light emitting unit based on a flashing period and an extinguishing period of a predetermined time interval, and controls the number of flashing times in the flashing period corresponding to the voltage of the battery.

7. A portable electronic device according to claim 1, wherein:
the light emitting unit comprises constitution to emit lights of a plurality of colors; and
the light control unit causes the light emitting unit to emit a light of a color corresponding to the voltage of the battery.

8. A portable electronic device according to claim 1, wherein the lighting control unit periodically lights the light emitting unit by setting a time interval between a lighting period and a next lighting period to a time interval corresponding to the voltage of the battery.

9. A portable electronic device according to claim 1, wherein the light emitting unit is a light emitting element which includes an LED.

10. A portable electronic device according to claim 9, further comprising an operation unit which includes a plurality of keys to operate the portable electronic device,
wherein the LED is incorporated in an optional key of the plurality of keys of the operation unit or near an optional key of the plurality of keys.

11. A lighting control method used for a portable electronic device including a display unit and a light emitting unit which is lit to notify an ON state of a power source in a power saving state in which a light of the display unit is turned OFF in the ON state of the power source using a battery, the lighting control method comprising:
measuring a voltage of the battery; and
controlling a lighting state of the light emitting unit in accordance with the measured voltage of the battery.

12. A lighting control method according to claim 11, wherein the controlling of a lighting state of the light emitting unit is to control a lighting time of the light emitting unit.

13. A lighting control method according to claim 11, further comprising periodically lighting the light emitting unit based on a lighting period and an extinguishing period of a predetermined time interval, wherein the controlling of a lighting state of the light emitting unit is to control a time of the lighting period.

14. A lighting control method according to claim 11, further comprising flashing the light emitting unit, wherein the controlling of a lighting state of the light emitting unit is to control the number of flashing times.

15. A lighting control method according to claim 11, further comprisingperiodically lighting the light emitting unit based on a flashing period and an extinguishing period of a predetermined time interval, wherein the controlling of a lighting state of the light emitting unit is to control the number of flashing times in the flashing period.

16. A lighting control method according to claim 11, wherein the light emitting unit comprises constitution to emit lights of a plurality of colors, and emits a light of a color corresponding to the voltage of the battery.

17. A lighting control method according to claim 11, further comprisingperiodically lighting the light emitting unit by a time interval, wherein the controlling of a lighting state of the light emitting unit is to control the time interval between a lighting period and a next lighting period.

18. A lighting control method according to claim 11, wherein the light emitting unit is a light emitting element which includes an LED.

19. A computer program product for causing a computer to execute lighting control used for a portable electronic device including a display unit and a light emitting unit which is lit to notify an ON state of a power source in a power saving state in which a light of the display unit is turned OFF in the ON state of the power source using a battery, the lighting control comprising:
measuring a voltage of the battery; and
controlling a lighting state of the light emitting unit in accordance with the measured voltage of the battery.

20. A computer program product according to claim 19, wherein the light emitting unit is a light emitting element which includes an LED.
